# EUROPÄISCHE PATENTSCHRIFT

(11) **EP 1 214 214 B1**
(45) Veröffentlichungstag und Bekanntmachung des Hinweises auf die Patenterteilung: **26.02.2003**
(21) Anmeldenummer: 00966036.6
(22) Anmeldetag: 16.09.2000
(51) Int. Cl.: B60K 7/00, B60K 17/04, B60T 1/06

(54) **RADANTRIEB ZUM ANTRIEB EINES FAHRZEUGRADES**
FINAL DRIVE FOR DRIVING A VEHICLE WHEEL
SYSTEME D'ENTRAINEMENT D'UNE ROUE DE VEHICULE

(30) Priorität: 22.09.1999 DE 19945345
(43) Veröffentlichungstag der Anmeldung: 19.06.2002
(73) Patentinhaber: ZF FRIEDRICHSHAFEN Aktiengesellschaft, 88038 Friedrichshafen (DE)
(72) Erfinder: BACHMANN, Max, 88339 Bad Waldsee (DE)
(86) Internationale Anmeldenummer: EP0009067
(87) Internationale Veröffentlichungsnummer: WO01021427

(56) Entgegenhaltungen:
- EP-A- 0 919 416
- DE-A- 3 924 817
- DE-A- 19 709 579
- US-A- 5 894 907

## Beschreibung

Die Erfindung betrifft einen Radantrieb zum Antrieb eines Fahrzeugrades nach der im Oberbegriff von Anspruch 1 näher definierten Art.

Radantriebe zum Antrieb eines Fahrzeugrades werden vorzugsweise in Niederfluromnibussen verwendet, bei welchen jedes angetriebene Fahrzeugrad einen eigenen Antriebsmotor aufweist. Um eine genügend breite Gangbreite im Omnibus zu erreichen, ist es nötig, die axiale Ausdehnung des Radantriebs möglichst gering zu halten.

In der gattungsgemäßen DE 197 09 579 A1 ist ein elektrischer Einzelradantrieb mit mehreren Motoren offenbart, bei welchem mehrere Motoren nicht koaxial zur Radachse angeordnet sind und über ein erstes Untersetzungsgetriebe ein zweites Untersetzungsgetriebe antreiben, dessen Abtrieb auf das Antriebsrad wirkt. Zwischen der ersten Untersetzungsstufe und der zweiten Untersetzungsstufe ist die Radlagerung sowie eine Bremsscheibe angeordnet, welche sich zusätzlich innerhalb der Erstreckung der Felge eines zwillingsbereiften Antriebsrades befindet. Indem beide Untersetzungsgetriebe durch die Radlagerung voneinander getrennt angeordnet sind, kommt es, vorzugsweise bei schrägverzahnten Zahnrädern, durch die Förderwirkung der Untersetzungsgetriebe zu einer Verlagerung des Ölstandes, was sich nachteilig auf die Schmierung einer Untersetzungsstufe auswirkt. Um den Radantrieb in seiner axialen Erstreckung kompakt ausführen und das geförderte Drehmoment bereitstellen zu können, müssen mehrere elektrische Antriebsmotoren verwendet werden.

Aus der DE-A-3 924 817 ist weiterhin ein Radantrieb zum Antrieb eines Fahrzeugrades mit einem zur Radachse koaxial angeordneten Antriebsmotor bekannt, welcher über Untersetzungsstufen ein Rad antreibt, welches über eine in Radialrichtung gesehen innerhalb einer Felge angeordneten Bremsscheibe einer Bremse und zugehöriger Betätigungseinrichtung bremsbar ist, wobei die Untersetzungsstufen unmittelbar benachbart angeordnet sind und wobei zwischen dem Antriebsmotor und den Untersetzungsstufen die Bremsscheibe angeordnet ist.

Der vorliegenden Erfindung liegt die Aufgabe zugrunde, einen Radantrieb zum Antrieb eines Fahrzeugrades zu schaffen, welcher in seiner axialen Erstreckung kompakt ausgeführt ist, die Bremse innerhalb einer Felge angeordnet ist, nur ein Antriebsmotor für jeden Radantrieb verwendet, die Untersetzungsgetriebe ausreichend geschmiert werden und sich durch guten Wirkungsgrad auszeichnet.

Die Aufgabe wird mit einem, auch die kennzeichnenden Merkmale des Hauptanspruchs aufweisenden, gattungsgemäßen Radantrieb gelöst.

Erfindungsgemäß ist der Radantrieb über eine Bremse abbremsbar, welche innerhalb der axialen Erstreckung einer Felge angeordnet ist, wobei es sich bei der Felge auch um eine Felge für einen Single-Reifen handeln kann und bei welchem die Bremse zwischen dem Antriebsmotor und den Untersetzungsstufen angeordnet ist. Indem die Untersetzungsstufen direkt benachbart angeordnet sind, können alle bewegten Teile der Verzahnung von einem Schmiermittel geschmiert werden, welches sich innerhalb eines gemeinsamen Raumes befindet, in welchem die Untersetzungsstufen angeordnet sind. Hierdurch stellt sich ein gleichmäßiges Temperaturniveau ein, welches durch die Anordnung der Untersetzungsgetriebe auf der Radaußenseite die Wärme gut an die Umgebung abgeben kann. Der Antriebsmotor ist nicht koaxial zur Radachse angeordnet, wodurch sich ein Bauraum zwischen Felge und Antriebsmotor ergibt, in welchem die Bremse und deren Betätigungseinrichtung angeordnet werden können. Die Radlagerung zur Aufnahme der Radkräfte ist vorzugsweise radial über dem ersten Untersetzungsgetriebe angeordnet, so daß der axiale Bauraum, welcher die Radlagerung benötigt, dem Antriebsmotor zur Verfügung steht. Dadurch kann der Antriebsmotor mit einer maximalen aktiven Länge, vorzugsweise ähnlich oder gleich des Luftspaltdurchmessers, ausgeführt werden, ohne daß sich die Gesamtlänge des Radantriebs vergrößert, wodurch sich der Wirkungsgrad des Antriebsmotors erhöht. Indem die Radlagerung in radialer Richtung außerhalb der ersten Untersetzungsstufe angeordnet ist, jedoch sich im axialen Erstreckungsbereich der ersten Untersetzungsstufe befindet, ist es möglich, die Radnabe, ein Bauteil der zweiten Untersetzungsstufe sowie den Lagerflansch mit der Radlagerung zu einer kompakten Baueinheit zu verbinden, welche auch bei Demontage des Radantriebs nicht getrennt werden muß, wodurch bei einer Montage im Servicefall die Radlagerung nicht mehr erneut eingestellt werden muß. Vorzugsweise ist die zweite Untersetzungsstufe als Planetengetriebe ausgeführt, wobei der Planetenträger des Planetengetriebes den Abtrieb bildet, das Hohlrad mit dem Nabenträger, welcher die Radlagerung trägt, verbunden wird und das innere Zentralrad den Antrieb bildet. Es ist jedoch auch möglich, das Hohlrad als Abtrieb auszubilden. Das innere Zentralrad wird von der ersten Untersetzungsstufe angetrieben, welche vorzugsweise so ausgeführt ist, daß deren Hohlrad den Abtrieb bildet, ein Antriebsritzel den Antrieb bildet, welches mit dem Hohlrad und mindestens zwei Zwischenräder in kämmender Verbindung steht, und der Träger, welcher das Zwischenrad hält, drehfest gehaltert ist. Indem das Antriebsritzel direkt mit dem Hohlrad in kämmender Verbindung steht, kann der Antriebsmotor, welcher das Antriebsritzel antreibt, mit einem maximalen Abstand zur Radachse angeordnet werden, wodurch ein ausreichender Bauraum für die Bremse und die Betätigungseinrichtung der Bremse entsteht. Indem das Antriebsritzel mit dem Hohlrad und mit mindestens zwei Zwischenräder in kämmender Verbindung steht, wird das Drehmoment am Antriebsritzel aufgeteilt, welches eine Steigerung der Lebensdauer des Antriebsritzels zur Folge hat und somit die erste Untersetzungsstufe kompakt ausgeführt werden kann, wodurch sich die Radlagerung im Durchmesser verringern läßt. Indem das Gehäuse des Antriebsmotors die Radkräfte überträgt und die Anflanschfläche des Antriebsmotors an einen Nabenträger, welcher die Radlagerung trägt, in welche die Radkräfte eingeleitet werden, sich im Bereich der Lastwirklinie des Rades befindet, können die Verbindungselemente der tragenden Teile, welche die Radkräfte aufnehmen, in ihrer Erstreckung geringer ausgeführt werden, da auf die Anflanschfläche und deren Verbindungselemente keine zusätzliche Drehmomentbelastung aus einem Abstand zur Lastwirklinie wirkt. Hierdurch kann die radiale Erstreckung der Anflanschfläche des Antriebsmotorgehäuses an den Lagerflansch so gering ausgeführt werden, daß ein Dichtelement zwischen dem drehfest angeordneten Lagerflansch und einer mit Raddrehzahl drehenden Radnabe angeordnet werden kann, welches durch die geringe radiale Erstreckung geringere Umfangsgeschwindigkeiten zu bewältigen hat. Das Gehäuse des Antriebsmotors kann entweder mit einer Achsbrücke in Verbindung stehen oder Aufnahmestellen aufweisen, an welche Befestigungselemente für die Befestigung des Radantriebs an der Fahrzeugkarosserie angeordnet werden können. Da der Antriebsmotor an der Radinnenseite angeordnet ist, kann die Energieversorgung günstig zugeführt werden. Vorzugsweise sind auf der Radnabe Rippen angeordnet, welche bei Drehung der Radnabe das die Radnabe umgebende Medium so in Bewegung versetzen, daß die Bremse und der Radantrieb gekühlt werden. Vorzugsweise wird das Gehäuse des Antriebsmotors von einer Kühlflüssigkeit durchströmt, welche somit den Antriebsmotor und über die Anflanschfläche des Antriebsmotors an den restlichen Radantrieb auch diesen kühlt.

Mit einer unmittelbar benachbarten Anordnung der Untersetzungsstufen sowie einer Bremse, welche zwischen den Untersetzungsstufen und dem Antriebsmotor, jedoch innerhalb der axialen und radialen Erstreckung einer Felge, angeordnet ist, wird ein Radantrieb zum Antrieb eines Fahrzeugrades geschaffen, welcher sich durch eine kompakte Bauweise auszeichnet, ein Antriebsmotor mit optimalem Wirkungsgrad verwendet werden kann und die Untersetzungsstufen ausreichend geschmiert werden.

Weitere Merkmale sind der Figuren-Beschreibung zu entnehmen.
Es zeigen:

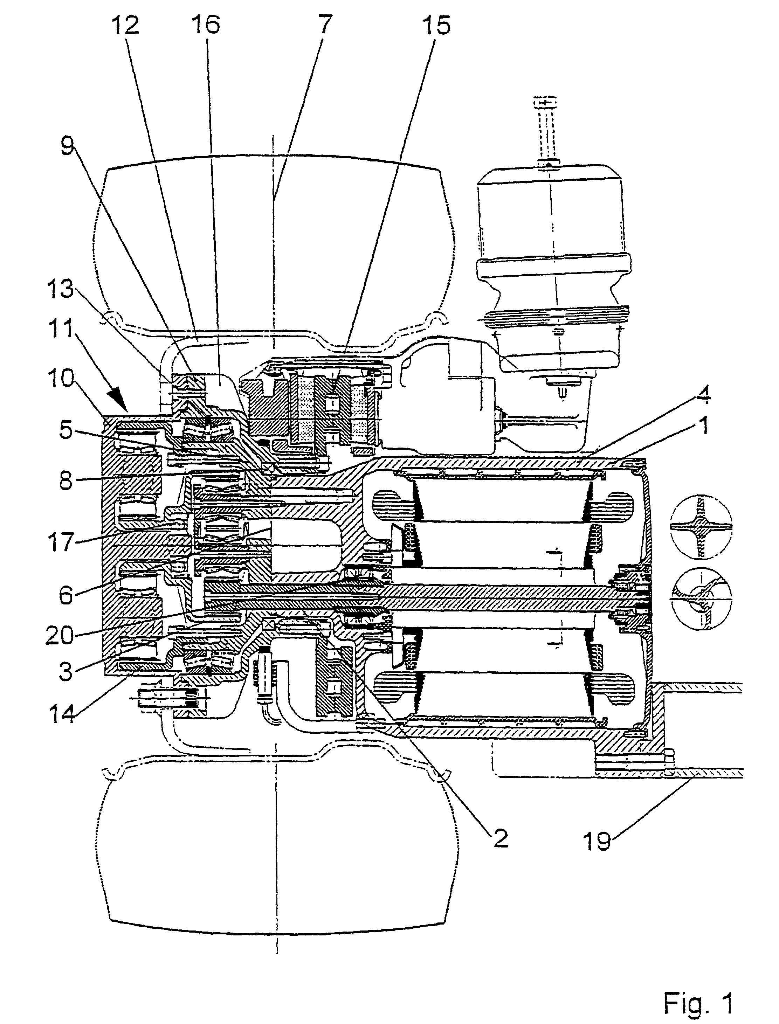

- Fig. 1: einen Radantrieb zum Antrieb eines Fahrzeugrades mit einem einschnittigen Planetenträger und

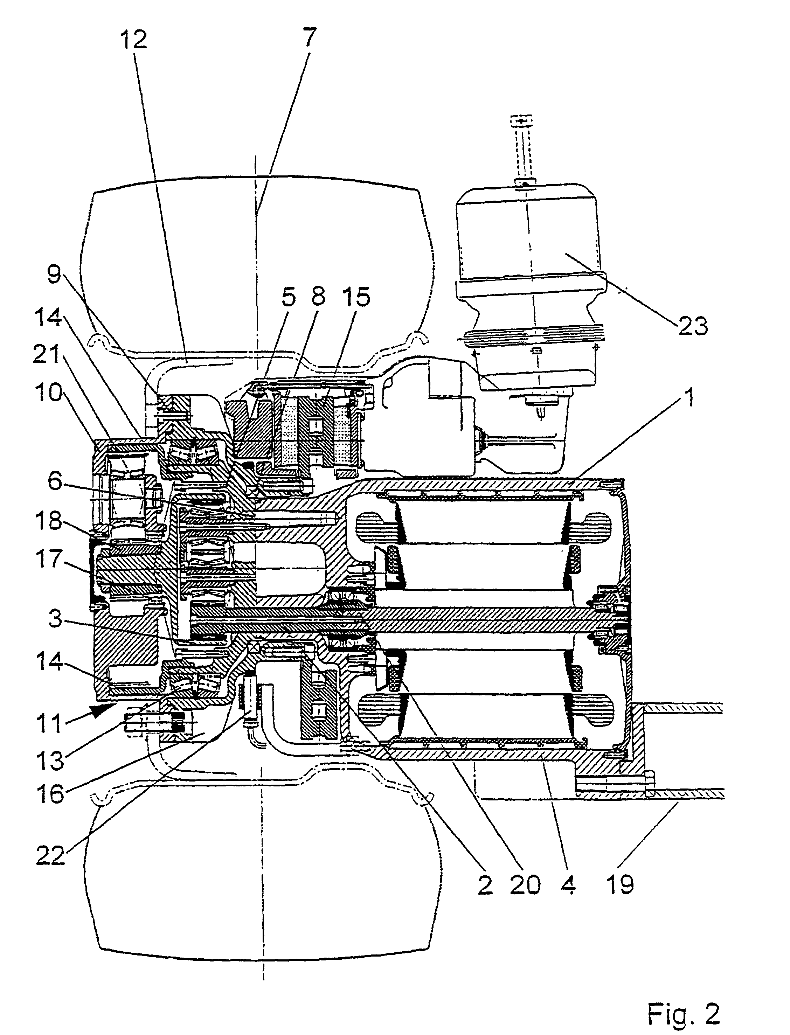

- Fig. 2: einen Radantrieb zum Antrieb eines Fahrzeugrades mit einem zweischnittigen Planetenträger;

Fig. 1:

Ein nicht koaxial zur Radachse angeordneter Antriebsmotor 1, welcher vorzugsweise als elektrischer Antriebsmotor, jedoch auch als hydraulischer oder pneumatischer Antriebsmotor, ausgeführt sein kann, treibt eine Antriebswelle 2, welche vorzugsweise im Gehäuse 4 des Antriebsmotors 1 geführt ist, einer ersten Untersetzungsstufe 3 an. Das Gehäuse 4 des Antriebsmotors 1 ist vorzugsweise wassergekühlt und mit einem Nabenträger 5 über Verbindungselemente verbunden. Die Anflanschfläche 6 des Antriebsmotors 1 an den Nabenträger 5 befindet sich im Bereich einer Lastwirklinie 7, in welcher die Radkräfte auf den Radantrieb wirken. Indem die Anflanschfläche 6 im Bereich der Lastwirklinie 7 angeordnet ist, wirken auf die Verbindungselemente, welche den Nabenträger 5 mit dem Gehäuse 4 des Antriebsmotors 1 verbinden, keine oder nur geringe, aus dem Fahrzeuggewicht entstehende, Drehmomentbelastungen. Somit kann die Anflanschfläche 6 in ihrer radialen Erstreckung gering ausgeführt werden und es ist möglich, auf diesem Durchmesser ein Dichtelement 8 zwischen einer mit Raddrehzahl drehenden Radnabe 9 und dem Nabenträger 5 anzuordnen. Da die radiale Erstreckung der Anflanschfläche 6 gering ist, ist auch die Umfangsgeschwindigkeit des Dichtelementes 8 gering, welches sich vorteilhaft auf die Lebensdauer des Dichtelementes 8 auswirkt. Die Radnabe 9 steht mit dem Planetenträger 10, welcher den Abtrieb eines zweiten Untersetzungsgetriebes 11 bildet, und einer Felge 12 in Verbindung. Eine Radlagerung 13 ist mit der Radnabe 9, dem Hohlrad 14, der zweiten Untersetzungsstufe 11, einem Dichtelement 8 und dem Nabenträger 5 zu einer Baueinheit verbunden, welche einmalig vom Werk eingestellt wird und bei einer Demontage des Radantriebs im Servicefall komplettiert bleibt. An der Radnabe 9 ist über Verbindungselemente eine Bremsscheibe 15 angeordnet, über welche die Radnabe 9 abbremsbar ist. Die Bremsscheibe 15, welche vorzugsweise in gebrochener Ausführung montiert ist, jedoch auch als komplette Bremsscheibe montiert sein kann, ist in ihrer axialen Einbaulage so weit von dem Dichtelement 8 entfernt, daß eine Temperaturbeeinträchtigung der Bremsscheibe 15 auf das Dichtelement 8 nicht stattfindet. Auf der Radnabe 9 sind vorzugsweise Rippen angeordnet, welche bei Drehung der Radnabe 9 das die Radnabe 9 umgebende Medium so in Bewegung versetzen, daß die Bremsscheibe 15 und der komplette Radantrieb gekühlt werden. Eine Lagerung 17, welche das innere Zentralrad 18 der zweiten Untersetzungsstufe 11 auf dem Planetenträger 10 lagert, dreht sich nur mit der Differenzdrehzahl des inneren Zentralrades 18 zum Planetenträger 10, wodurch sich die Lebensdauer des Lagers vergrößert. Die Lagerung 17 kann auch durch eine axiale Anlaufscheibe ausgeführt werden. Werden die erste Untersetzungsstufe 3 und die zweite Untersetzungsstufe 11 schrägverzahnt ausgeführt, so besteht die Möglichkeit, die Verzahnung so auszulegen, daß die Lagerung 17 kräftefrei ist. Das Gehäuse 4 des Antriebsmotors 1 ist vorzugsweise mit einer Achsbrücke 19 verbunden, kann jedoch auch mit Befestigungselementen für eine Einzelradaufhängung ausgeführt sein. Die erste Untersetzungsstufe 3 und die zweite Untersetzungsstufe 11 sind direkt benachbart angeordnet, wodurch beide von einem gemeinsamen Schmiermittel umgeben sind, wodurch die Schmierung für beide Untersetzungsstufen gewährleistet ist. Die Radlagerung 13 ist radial außerhalb der ersten Untersetzungsstufe 3, jedoch axial im Bereich der ersten Untersetzungsstufe 3, angeordnet, wodurch ein sehr kompakter Radantrieb geschaffen werden kann. Indem die Radlagerung 13 radial außerhalb der ersten Übersetzungsstufe 3 angeordnet ist und vorzugsweise eine Kegelrollenlagerung in O-Anordnung verwendet wird, entsteht eine stabile Lagerung des Antriebsrades. Die Antriebswelle 2 weist vorzugsweise eine wendelförmige Vertiefung an ihrer Oberfläche auf, welche das Schmiermittel gezielt so fördert, daß die Motorlagerung 20 geschmiert bleibt. Es besteht auch die Möglichkeit, die Öffnung, in welcher die Antriebswelle 2 angeordnet ist, exzentrisch auszuführen, um ausreichend Schmiermittel für die Motorlagerung 20 bereitzustellen. Die Verzahnungen der Untersetzungsgetriebe 3 und 11 sind vorzugsweise schrägverzahnt, um ein günstiges Geräuschniveau zu erreichen. Die Planeten 21 des zweiten Untersetzungsgetriebes 11 sind fliegend gelagert, wodurch sich die axiale Baulänge des Radantriebs zusätzlich verringert.

Fig. 2:

Ein Antriebsmotor 1 treibt eine erste Untersetzungsstufe 3 an, deren Abtrieb eine zweite Untersetzungsstufe 11 antreibt, welche vorzugsweise als Planetengetriebe ausgeführt ist, deren Planetenräder 21 zweischnittig gelagert sind. Das Hohlrad 14 der zweiten Untersetzungsstufe 11 kann entweder über eine Schraubverbindung oder über Sicherungsringe oder -stifte in radialer Richtung mit dem Nabenträger 5 verbunden werden. Ein Drehzahlsensor 22 ist zwischen der Bremsscheibe 15 und dem ersten Untersetzungsgetriebe 3 angeordnet. Die Betätigungseinrichtung 23 der Bremse ist vorzugsweise seitlich angeordnet, jedoch ist eine Betätigung der Bremse über Gestänge außerhalb des Rades auch möglich.

### Bezugszeichen

- 1: Antriebsmotor
- 2: Antriebswelle
- 3: erste Untersetzungsstufe
- 4: Gehäuse
- 5: Nabenträger
- 6: Anflanschfläche
- 7: Lastwirklinie
- 8: Dichtelement
- 9: Radnabe
- 10: Planetenträger
- 11: zweite Untersetzungsstufe
- 12: Felge
- 13: Radlagerung
- 14: Hohlrad
- 15: Bremsscheibe
- 16: Rippen
- 17: Lagerung
- 18: inneres Zentralrad
- 19: Achsbrücke
- 20: Motorlagerung
- 21: Planetenräder
- 22: Drehzahlsensor
- 23: Betätigungseinrichtung

## Patentansprüche

1. Radantrieb zum Antrieb eines Fahrzeugrades mit einem zur Radachse nicht koaxial angeordneten Antriebsmotor (1), welcher über Untersetzungsstufen (3, 11) ein Rad antreibt, welches über eine innerhalb der axialen und radialen Erstreckung einer Felge (12) angeordneten Bremsscheibe (15) einer Bremse und zugehöriger Betätigungseinrichtung (23) bremsbar ist, **dadurch gekennzeichnet, daß** die Untersetzungsstufen (3, 11) unmittelbar benachbart angeordnet sind, daß zwischen dem Antriebsmotor (1) und den Untersetzungsstufen (3, 11) die Bremsscheibe (15) angeordnet ist, und daß die axiale Erstreckung des Antriebsmotors (1) von der Bremsscheibe (15) und der Betätigungseinrichtung (23) der Bremse begrenzt wird.

2. Radantrieb nach Anspruch 1, **dadurch gekennzeichnet, daß** eine Radlagerung (13) zur Aufnahme der Radkräfte radial außerhalb der einen Untersetzungsstufe (3) angeordnet ist.

3. Radantrieb nach Anspruch 1, **dadurch gekennzeichnet, daß** eine Radlagerung (13) zur Aufnahme der Radkräfte im axialen Erstreckungsbereich der einen Untersetzungsstufe (3) angeordnet ist.

4. Radantrieb nach Anspruch 1, **dadurch gekennzeichnet, daß** die Anflanschfläche (6) des Antriebsmotors (1) an die Untersetzungsstufen (3, 11) im Bereich einer Lastwirklinie (7) des Rades angeordnet ist.

5. Radantrieb nach Anspruch 1, **dadurch gekennzeichnet, daß** die Radkräfte auf ein Gehäuse (4) des Antriebsmotors (1) wirken.

6. Radantrieb nach Anspruch 1, **dadurch gekennzeichnet, daß** der Antriebsmotor (1) ein Elektromotor mit einer aktiven Länge, ähnlich des Luftspaltdurchmessers, ist.

7. Radantrieb nach Anspruch 1, **dadurch gekennzeichnet, daß** eine Abdichtung (8) zwischen einem drehfest gehaltenen Bauteil (5) und einer Radnabe (9) innerhalb der radialen Erstreckung der Bremsscheibe angeordnet ist.

8. Radantrieb nach Anspruch 1, **dadurch gekennzeichnet, daß** ein drehfest gehaltenes Teil (14) der anderen Untersetzungsstufe (11) so mit einem drehfest gehaltenen Nabenträger (5), welcher mit Radlagern (13) in Wirkverbindung steht, verbunden ist, daß durch Befestigen des drehfest gehaltenen Teils (14) der anderen Untersetzungsstufe (11) mit dem Nabenträger (5) die Radlagerung (13) auf dem Nabenträger (5) befestigt wird.

9. Radantrieb nach Anspruch 1, **dadurch gekennzeichnet, daß** eine Radnabe (9) Rippen (16) aufweist, welche bei Drehung der Radnabe (9) das die Radnabe (9) umgebende Medium in Bewegung versetzt und die Bremse (15) und/oder den Radantrieb kühlt.

10. Radantrieb nach Anspruch 1, **dadurch gekennzeichnet, daß** der Antriebsmotor (1) flüssigkeitsgekühlt ist.

11. Radantrieb nach Anspruch 1, **dadurch gekennzeichnet, daß** ein Hohlrad (14) der anderen Untersetzungsstufe (11), ein drehfest gehaltener Nabenträger (5), eine Radlagerung (13) und eine Abdichtung ((8) zu einer Baueinheit zusammengefügt sind.

12. Radantrieb nach Anspruch 1, **dadurch gekennzeichnet, daß** eine Antriebswelle (2) der einen Untersetzungsstufe (3) eine wendelförmige Vertiefung aufweist, welche bei Drehung der Antriebswelle (2) Schmiermittel fördert.

13. Radantrieb nach Anspruch 1, **dadurch gekennzeichnet, daß** ein Antriebsritzel der einen Untersetzungsstufe (3) mit einem Hohlrad und mindestens zwei Zwischenrädern in kämmender Verbindung steht.

14. Radantrieb nach Anspruch 2, **dadurch gekennzeichnet, daß** die Radlagerung (13) als Schräglager in O-Anordnung ausgeführt ist.

## Claims

1. Final drive for driving a vehicle wheel, with a drive motor (1) not arranged coaxially relative to the wheel axle, which via reduction stages (3, 11) drives a wheel, which is brakable by means of a brake disk (15) of a brake arranged within the axial and radial section of a rim (12) and an accessory actuating element (23), **characterized in that** the reduction stages (3, 11) are arranged in the immediate vicinity, that the brake disk (15) is arranged between the drive motor (1) and the reduction stages (3, 11) and that the axial section of the drive motor (1) is limited by the brake disk (15) and the actuating element (23).

2. Final drive in accordance with claim 1, **characterized in that** a wheel bearing (13) for wheel force absorption is arranged radially outside of one of the reduction stages (3).

3. Final drive in accordance with claim 1, **characterized in that** a wheel bearing (13) for wheel force absorption is arranged in the axial section of one of the reduction stages (3).

4. Final drive in accordance with claim 1, **characterized in that** the drive motor's (1) flange face (6) for the reduction stages (3, 11) is arranged in the area of a line of action (7) of the wheel.

5. Final drive in accordance with claim 1, **characterized in that** the wheel forces act on a housing (4) of the drive motor (1).

6. Final drive in accordance with claim 1, **characterized in that** the drive motor (1) is an electric motor with an active length analogous to the air gap diameter.

7. Final drive in accordance with claim 1, **characterized in that** a sealing (8) is arranged between a nonrotationally connected component (5) and a hub (9) within the radial section of the brake disk.

8. Final drive in accordance with claim 1, **characterized in that** a nonrotationally connected component (14) of the other reduction stage (11) is connected to a nonrotationally fixed hub carrier (5), which has a working connection with wheel bearings (13), in a manner that the wheel bearings (13) are fixed to the hub carrier (5) by fixing the nonrotationally mounted component (14) of the other reduction stage (11) to the hub carrier (5).

9. Final drive in accordance with claim 1, **characterized in that** a hub (9) is provided with ribs (16), which during rotation of the hub (9) stir the medium surrounding the hub (9) and cool the brake (15) and/or the final drive.

10. Final drive in accordance with claim 1, **characterized in that** the drive motor (1) is liquid-cooled.

11. Final drive in accordance with claim 1, **characterized in that** a ring gear (14) of the other reduction stage (11), a nonrotationally fixed hub carrier (5), wheel bearings (13) and a sealing (8) are united in a single assembly.

12. Final drive in accordance with claim 1, **characterized in that** an input shaft (2) of one of the reduction stages (3) is provided with a spiral-shaped recess which delivers lubricant when the input shaft (2) turns.

13. Final drive in accordance with claim 1, **characterized in that** a drive pinion of one of the reduction stages (3) meshes with a ring gear and at least two intermediate gears.

14. Final drive in accordance with claim 2, **characterized in that** the wheel bearings (13) are designed as o-arranged angular contact bearings.

## Revendications

1. Entraînement de roue, pour l'entraînement d'une roue de véhicule, comprenant un moteur d'entraînement (1) qui n'est pas disposé coaxialement à l'axe de la roue, lequel moteur entraîne par l'intermédiaire d'étages de réduction (3, 11) une roue qui peut être freinée par l'intermédiaire d'un disque de frein (15) d'un frein, disposé dans les limites de l'extension axiale et radiale d'une jante (12) et au moyen d'un dispositif d'actionnement correspondant (23), **caractérisé en ce que** les étages de réduction (3, 11) sont disposés immédiatement adjacents l'un à l'autre, **en ce que** le disque de frein (15) est disposé entre le moteur d'entraînement (1) et les étages de réduction (3, 11), et **en ce que** l'extension axiale du moteur d'entraînement (1) est limitée par le disque de frein (15) et par le dispositif d'actionnement (23) du frein.

2. Entraînement de roue selon la revendication 1, **caractérisé en ce qu'**un palier de roue (13) destiné à absorber les forces de la roue est disposé radialement à l'extérieur de l'un (3) des étages de réduction.

3. Entraînement de roue selon la revendication 1, **caractérisé en ce qu'**un palier de roue (13) destiné à absorber les forces de la roue est disposé dans la région d'extension axiale de l'un (3) des étages de réduction.

4. Entraînement de roue selon la revendication 1, **caractérisé en ce que** la surface de montage par flasque (6) du moteur d'entraînement (1) aux étages de réduction (3, 11) est disposée dans la région d'une ligne d'action de charge (7) de la roue.

5. Entraînement de roue selon la revendication 1, **caractérisé en ce que** les forces de roue agissent sur un carter (4) du moteur d'entraînement (1).

6. Entraînement de roue selon la revendication 1, **caractérisé en ce que** le moteur d'entraînement (1) est un moteur électrique comportant une longueur active à peu près égale au diamètre de l'entrefer.

7. Entraînement de roue selon la revendication 1, **caractérisé en ce qu'**un dispositif d'étanchéité (8) est disposé entre un élément (5) immobilisé en rotation et un moyeu de roue (9) dans les limites de l'extension radiale du frein de roue.

8. Entraînement de roue selon la revendication 1, **caractérisé en ce qu'**une partie (14) de l'autre étage de réduction (11) qui est tenue immobilisée en rotation est reliée à un support de moyeu (5) tenu solidaire en rotation qui est en liaison active avec des paliers de roue (13) de telle manière que le palier de roue (13) soit fixé au support de palier (5) sous l'effet de la fixation de la partie (14) de l'autre étage de réduction (11) qui est tenue immobilisée en rotation, au support de moyeu (5).

9. Entraînement de roue selon la revendication 1, **caractérisé en ce qu'**un moyeu de roue (9) comporte des nervures (16) qui, pendant la rotation du moyeu de roue (9), mettent en mouvement le milieu qui entoure le moyeu de roue (9) et refroidissent le frein (15) et/ou l'entraînement de roue.

10. Entraînement de roue selon la revendication 1, **caractérisé en ce que** le moteur d'entraînement (1) est refroidi par un liquide.

11. Entraînement de roue selon la revendication 1, **caractérisé en ce qu'**une couronne (14) de l'autre étage de réduction (11), un support de moyeu (5) tenu immobilisé en rotation, un palier de roue (13) et un dispositif d'étanchéité (8) sont réunis en un module.

12. Entraînement de roue selon la revendication 1, **caractérisé en ce qu'**un arbre d'entraînement (2) de l'un (3) des étages de réduction comporte un évidement hélicoïdal qui refoule un lubrifiant lors de la rotation de l'arbre d'entraînement (2).

13. Entraînement de roue selon la revendication 1, **caractérisé en ce qu'**un pignon d'entraînement de l'un (3) des étages de réduction est en liaison par engrènement avec une couronne et avec au moins deux roues intermédiaires.

14. Entraînement de roue selon la revendication 2, **caractérisé en ce que** le palier de roue (13) est réalisé sous la forme d'un palier oblique à disposition en O.
